# DEMANDE DE BREVET EUROPEEN

(11) **EP 4 641 859 A1**
(43) Date de publication de la demande: **29.10.2025**
(21) Numéro de dépôt: 24171715.6
(22) Date de dépôt: 22.04.2024
(51) Int. Cl.: H02J 3/00, B61L 25/00, H02J 13/00

(54) **SYSTÈME ET PROCÉDÉ DE DÉTERMINATION DYNAMIQUE DE COURANT PERMANENT ADMISSIBLE DANS UN CÂBLE CONDUCTEUR DE LIGNE ÉLECTRIQUE AÉRIENNE**

(71) Demandeur: RTE RESEAU DE TRANSPORT D'ELECTRICITE, 92073 Paris La Défense Cedex (FR)
(72) Inventeur: BARBESANT, Vincent, 75002 Paris (FR)
(74) Mandataire: Bonnet, Michel

(57) **Abrégé**

Ce système de détermination dynamique de courant permanent admissible dans un câble conducteur (12) suspendu entre deux pylônes (14) d'une ligne électrique aérienne (10) comporte : une balise (16) fixée au câble incluant un capteur (34) d'une grandeur physique et un module de télécommunication (38) ; des moyens (58) de calcul d'une valeur de flèche courante du câble à partir de cette grandeur physique ; un calculateur distant (18) programmé pour fournir une valeur du courant permanent admissible en fonction de la valeur de flèche courante et d'une valeur de flèche maximale admissible. La balise (16) est une balise de localisation, dont le capteur (34) est un récepteur de positionnement par satellite pour la fourniture d'une information de position géolocalisée. Les moyens de calcul (58) sont des moyens de calcul de la valeur de flèche courante à partir de l'information de position géolocalisée fournie par le récepteur de positionnement.

## Description

La présente invention concerne un système de détermination dynamique de courant permanent admissible dans un câble conducteur suspendu entre deux pylônes d'une ligne aérienne de transport et/ou de distribution de courant électrique, notamment une ligne à moyenne, haute ou très haute tension. Elle concerne également un procédé correspondant, ainsi qu'une installation de surveillance d'une ligne aérienne de transport et/ou de distribution de courant électrique comportant un tel système.

Selon la Commission Electrotechnique Internationale, le courant permanent admissible est « la valeur maximale du courant électrique qui peut parcourir en permanence, un conducteur, un dispositif ou un appareil, sans que sa température de régime permanent, dans des conditions données, soit supérieure à la valeur spécifiée ». Cette valeur spécifiée est la température limite de fonctionnement ou température de répartition. Le courant permanent admissible est exprimé en ampère et est généralement appelé « ampacité » par souci de concision, ce mot-valise étant formé à partir des mots « ampère » et « capacité » pour exprimer cette notion de capacité de transport d'énergie électrique liée à l'échauffement des conducteurs par effet Joule. Cette capacité dépend donc du type de câble conducteur et de son environnement. Appliquée à une ligne aérienne, elle se traduit en flèche (de l'anglais « sag ») maximale admissible. En d'autres termes, l'intensité de courant qui peut transiter en régime permanent dans un câble conducteur suspendu entre deux pylônes de cette ligne aérienne doit être contrôlée pour que la flèche maximale admissible de ce câble conducteur ne soit pas dépassée, ce dernier devant toujours conserver une certaine distance de sécurité avec le sol, la végétation, les constructions et les activités humaines. L'ampacité, ou intensité maximale qui peut transiter en régime permanent, est donc dépendante de cette flèche maximale admissible, mais également de données météorologiques qui ont elles aussi une influence sur la température du câble conducteur et sur son allongement par dilatation thermique.

Conformément à une approche statique appelée SLR (de l'anglais « Static Line Rating »), l'ampacité peut être calculée à l'aide de paramètres météorologiques qui sont choisis a *priori* comme les plus défavorables possibles dans l'environnement de la ligne à haute tension pour s'assurer que l'ampacité résultante calculée de cette façon constitue une valeur limite réellement pertinente vis-à-vis des risques de dépassement de la température de répartition. Il en résulte une valeur d'ampacité largement sous-estimée dans la plupart des situations réelles, ainsi qu'une incapacité à maîtriser les dépassements de la température limite de fonctionnement dans des conditions exceptionnelles. Cette rigidité de l'approche statique fait ainsi courir un double risque plus élevé d'engorgements et de dépassements de flèche maximale admissible.

Conformément à une approche dynamique appelée DLR (de l'anglais « Dynamic Line Rating »), l'ampacité est avantageusement estimée dynamiquement sur la base de paramètres météorologiques instantanés et locaux, comme par exemple enseigné dans le document de brevet WO 2010/054072 A1, et d'une valeur prédéterminée de flèche maximale admissible. Ainsi, selon l'enseignement de la thèse de doctorat intitulée « Prévision du Dynamic Line Rating et Impact sur la Gestion du Système Electrique », soutenue par Romain Dupin le 3 juillet 2018, deux équations mécaniques, l'une de chaînette, l'autre de changement d'état, lient la température d'un câble conducteur de ligne électrique aérienne à ses déformations incluant sa flèche. Par la suite, une relation d'équilibre thermique prédéterminée, notamment selon un standard CIGRE ou IEEE, lie la température du câble conducteur, le courant passant en son coeur et les paramètres météorologiques. La flèche maximale admissible peut ainsi être reliée à l'ampacité.

Mais une estimation instantanée d'une valeur de flèche courante du câble conducteur suspendu entre deux pylônes peut avantageusement être exploitée dans ce calcul d'ampacité à l'aide des modèles de calcul connus, comme par exemple évoqué en page 17, lignes 9 à 12, du document de brevet WO 2007/031435 A1, ou comme explicitement défini dans l'équation (2) en page 10 du document de brevet EP 3 238 311 B1.

Une première raison est que ce paramètre de flèche courante est redondant avec les autres paramètres, notamment météorologiques. Il permet de renforcer ou corriger les modèles en jeu pour une estimation la plus précise possible de l'ampacité.

Une deuxième raison est qu'il peut plus spécifiquement servir à estimer un paramètre météorologique particulièrement important mais difficile à mesurer qu'est la vitesse du vent, incluant son sens et son amplitude, comme par exemple enseigné dans l'article de Schell et al, intitulé « Quantifying the limits of weather based dynamic line rating methods » et publié à l'occasion de Cigré Canada, Conférence on Power Systems, Halifax, en septembre 2011. Il peut plus généralement se substituer à au moins une partie des paramètres météorologiques nécessaires au calcul d'ampacité.

Une troisième raison est qu'il permet d'estimer une autorisation ponctuelle de dépassement transitoire de l'ampacité, ce dépassement étant généralement appelé, par abus de langage, « ampacité transitoire ».

Dans un contexte de détermination d'ampacité, différentes solutions existent pour déterminer cette flèche à chaque instant souhaité, parmi lesquelles :
- des capteurs de tension mécanique se présentant sous la forme de jauges de contraintes, déployés sur chaque portion de ligne électrique aérienne entre pylônes successifs pour en estimer la flèche, tels que définis dans le document de brevet US 5,918,288 ;
- des capteurs de vibrations, déployés également sur chaque portion de ligne électrique aérienne entre pylônes successifs pour en estimer la flèche par analyse fréquentielle de vibrations, comme enseigné dans le document de brevet précité WO 2007/031435 A1 ;
- des capteurs d'inclinaison et température de surface, déployés également sur chaque portion de ligne électrique aérienne entre pylônes successifs pour en estimer la flèche par analyse d'inclinaison, comme enseigné dans le document de brevet WO 2006/014691 A1 ;
- des capteurs optiques LiDAR (de l'anglais « Light Détection And Ranging »), déployés également sur chaque portion de ligne électrique aérienne entre pylônes successifs pour en estimer la flèche par modélisation tridimensionnelle, comme enseigné dans le document de brevet WO 2022/097178 A1 ;
- des accéléromètres, déployés également sur chaque portion de ligne électrique aérienne entre pylônes successifs pour en estimer la flèche selon un modèle de corrélation supposée entre l'accélération et la flèche, comme enseigné dans le document de brevet précité EP 3 238 311 B1.

Certains de ces capteurs sont intégrés dans des balises fixées au câble conducteur et transmettent leurs données par télécommunication pour traitement. En conformité avec ces solutions, l'invention s'applique plus particulièrement à un système d'estimation dynamique de courant permanent admissible dans un câble conducteur suspendu entre deux pylônes d'une ligne aérienne de transport et/ou de distribution de courant électrique, comportant :
- une balise incluant un élément de fixation au câble conducteur, un capteur d'une grandeur physique et un module de télécommunication ;
- des moyens de calcul d'une valeur de flèche courante du câble conducteur à partir de cette grandeur physique ; et
- un calculateur, distant et apte à interagir avec le module de télécommunication de la balise, programmé pour fournir une valeur du courant permanent admissible en fonction au moins de la valeur de flèche courante calculée et d'une valeur de flèche maximale admissible prédéterminée.

Les solutions existantes précitées sont soit imprécises, soit de fiabilité discutable, soit onéreuses, soit d'installation complexe.

Il peut ainsi être souhaité de prévoir un système d'estimation dynamique de courant permanent admissible qui permette de s'affranchir d'au moins une partie des problèmes et contraintes précités.

Il est donc proposé un système de détermination dynamique de courant permanent admissible dans un câble conducteur suspendu entre deux pylônes d'une ligne aérienne de transport et/ou de distribution de courant électrique, comportant :
- une balise incluant un élément de fixation au câble conducteur, un capteur d'une grandeur physique et un module de télécommunication ;
- des moyens de calcul d'une valeur de flèche courante du câble conducteur à partir de cette grandeur physique ; et
- un calculateur, distant et apte à interagir avec le module de télécommunication de la balise, programmé pour fournir une valeur du courant permanent admissible en fonction au moins de la valeur de flèche courante calculée et d'une valeur de flèche maximale admissible prédéterminée.
dans lequel :
- la balise est une balise de localisation, dont le capteur est un récepteur de positionnement par satellite pour la fourniture d'une information de position géolocalisée par satellite ;
- les moyens de calcul sont des moyens de calcul de la valeur de flèche courante du câble conducteur à partir de l'information de position géolocalisée par satellite fournie par le récepteur de positionnement.

Ainsi, par une mesure directe de position à l'aide d'une technique de géolocalisation par satellite surmontant un préjugé ancien qui n'envisageait de calcul de flèche courante qu'à l'aide de mesures indirectes, l'estimation de la flèche est à la fois plus simple et plus précise, rendant la détermination dynamique de courant permanent admissible ou ampacité elle aussi plus simple et plus précise.

De façon optionnelle mais avantageuse pour une meilleure précision, la balise de localisation comporte en outre un correcteur, implémenté en technique de cinématique temps réel de positionnement par satellite, comportant :
- un récepteur de signal de correction fourni par au moins une station de géolocalisation par satellite de référence ; et
- un calculateur local d'information de position corrigée à partir de l'information de position fournie par le récepteur de positionnement et du signal de correction.

De façon optionnelle également, la balise de localisation comporte une source d'énergie électrique à batterie d'accumulateurs électriques et/ou à panneau solaire photovoltaïque et/ou à récupération, par induction électromagnétique, de courant électrique conduit par le câble conducteur auquel elle est destinée à être fixée.

De façon optionnelle également, l'élément de fixation de la balise de localisation au câble conducteur comporte au moins l'un des éléments de l'ensemble constitué d'une pince motorisée à vis, d'une pince à loquet magnétique, d'une pince motorisée à vérin et d'une pince motorisée à motoréducteur et engrenage.

De façon optionnelle également :
- la balise de localisation comporte en outre un module capteur de données météorologiques locales, incluant un capteur de température, un capteur d'irradiation solaire et un capteur de vent ; et
- le calculateur distant est programmé pour fournir une valeur du courant permanent admissible en fonction en outre des données météorologiques locales fournies par la balise de localisation.

De façon optionnelle également, le calculateur distant est programmé pour fournir la valeur du courant permanent admissible par application d'une relation d'équilibre thermique prédéterminée selon un standard CIGRE ou IEEE à une température du câble conducteur dérivée de la valeur de flèche courante calculée.

De façon optionnelle également, les moyens de calcul de la valeur de flèche courante sont intégrés dans un calculateur inclus dans la balise de localisation, le module de télécommunication étant alors configuré pour transmettre cette valeur de flèche courante au calculateur distant.

De façon optionnelle également et en variante de l'option précédente, les moyens de calcul de la valeur de flèche courante sont intégrés dans le calculateur distant, le module de télécommunication étant alors configuré pour transmettre l'information de position fournie par la balise de localisation au calculateur distant.

Il est également proposé une installation de surveillance dynamique d'une ligne aérienne de transport et/ou de distribution de courant électrique comportant :
- un système de détermination dynamique de courant permanent admissible selon l'invention ;
- des moyens de stockage de la valeur de courant permanent admissible fournie par le système d'estimation dynamique de courant permanent admissible ;
- une interface de transmission de données conçue pour la réception d'une valeur d'intensité de courant électrique effectivement transmise par la ligne aérienne ; et
- un détecteur de dépassement de la valeur de courant permanent admissible par la valeur d'Intensité reçue.

Il est également proposé un procédé de détermination dynamique de courant permanent admissible dans un câble conducteur suspendu entre deux pylônes d'une ligne aérienne de transport et/ou de distribution de courant électrique, comportant les étapes suivantes :
- fixation au câble conducteur d'une balise incluant un élément de fixation au câble conducteur, un capteur d'une grandeur physique et un module de télécommunication ;
- fourniture par le capteur de la grandeur physique ;
- calcul d'une valeur de flèche courante du câble conducteur à partir de cette grandeur physique ; et
- calcul distant, par interaction avec le module de télécommunication de la balise, d'une valeur du courant permanent admissible en fonction au moins de la valeur de flèche courante calculée et d'une valeur de flèche maximale admissible prédéterminée ;
dans lequel :
- la balise étant une balise de localisation, dont le capteur est un récepteur de positionnement par satellite, c'est une information de position géolocalisée par satellite qui est fournie par ce dernier ;
- le calcul de la valeur de flèche courante du câble conducteur se fait à partir de l'information de position géolocalisée par satellite fournie par le récepteur de positionnement.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation de surveillance dynamique d'une ligne aérienne de transport et/ou de distribution de courant électrique comportant un système de détermination dynamique de courant permanent admissible selon un mode de réalisation de l'invention,
- la figure 2 représente schématiquement un premier mode de réalisation détaillé de l'installation de surveillance de la figure 1,
- la figure 3 représente schématiquement un deuxième mode de réalisation détaillé de l'installation de surveillance de la figure 1,
- la figure 4A illustre une implémentation concrète possible d'une balise de localisation de l'installation de surveillance de la figure 1, incluant un élément de fixation à un câble conducteur selon un premier mode de réalisation, en disposition ouverte autour de ce câble conducteur,
- la figure 4B illustre la balise de localisation de la figure 4A, en disposition fermée autour du câble conducteur,
- la figure 5 illustre un deuxième mode de réalisation possible pour l'élément de fixation de la balise de localisation des figures 4A, 4B au câble conducteur,
- la figure 6 illustre un troisième mode de réalisation possible d'élément de fixation de la balise de localisation des figures 4A, 4B au câble conducteur,
- la figure 7 illustre un quatrième mode de réalisation possible d'élément de fixation de la balise de localisation des figures 4A, 4B au câble conducteur,
- la figure 8 illustre un cinquième mode de réalisation possible d'élément de fixation de la balise de localisation des figures 4A, 4B au câble conducteur, et
- la figure 9 illustre les étapes successives d'un procédé de surveillance dynamique d'une ligne aérienne de transport et/ou de distribution de courant électrique incluant un procédé de détermination dynamique de courant permanent admissible selon un mode de réalisation de l'invention.

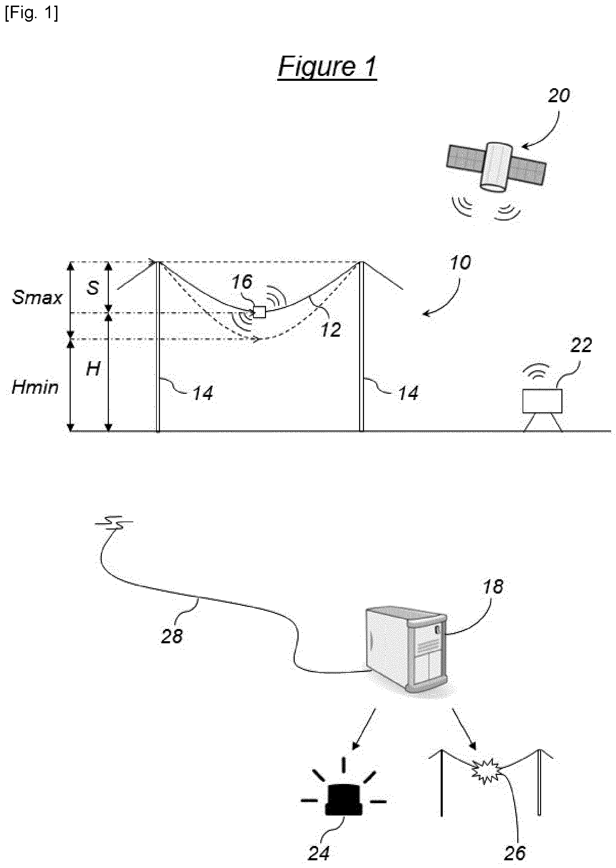

Une portion de ligne électrique aérienne 10 de transport et/ou de distribution de courant électrique à moyenne, haute ou très haute tension comprenant au moins un câble conducteur 12 fixé, à intervalles réguliers, à des pylônes 14 est illustrée sur la figure 1. Plus précisément, la portion de câble conducteur 12 représentée sur la figure 1 est aérienne et suspendue entre deux pylônes 14 successifs. Il s'agit d'une portion de portée critique de la ligne électrique aérienne 10, c'est-à-dire une portion où la flèche maximale admissible pour la câble conducteur 12 a le plus de chances d'être atteinte en premier sur la ligne 10.

La ligne électrique aérienne 10 est destinée à opérer principalement en régime établi ou permanent, lors duquel on observe un équilibre thermique entre les puissances d'échauffement et de refroidissement du câble conducteur 12. Accessoirement, elle peut être exploitée ponctuellement en régime transitoire, lors duquel les puissances d'échauffement et de refroidissement du câble conducteur 12 sont en déséquilibre thermique. Les pylônes 14 sont destinés à maintenir le câble conducteur 12 au-delà d'une certaine hauteur minimale Hmin en régime permanent, ou temporairement par exception à une hauteur minimale H'min < Hmin en régime transitoire.

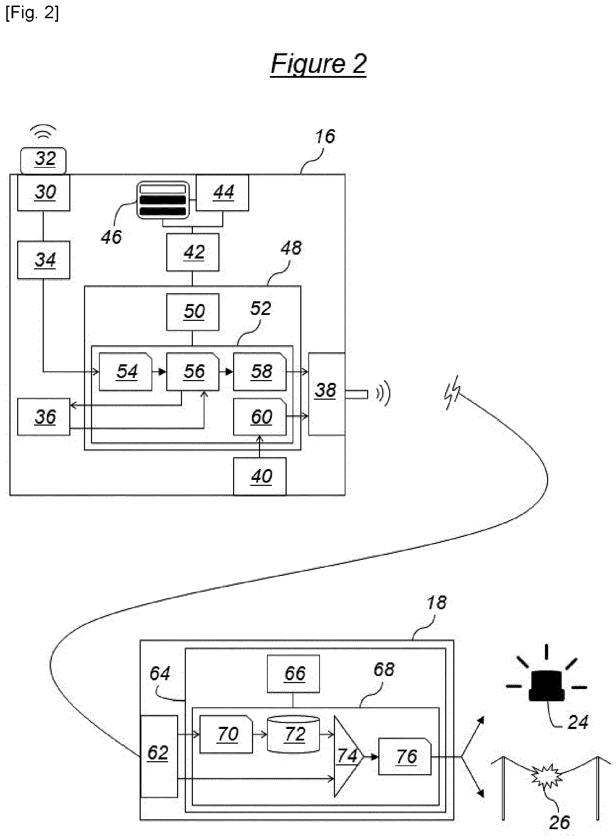

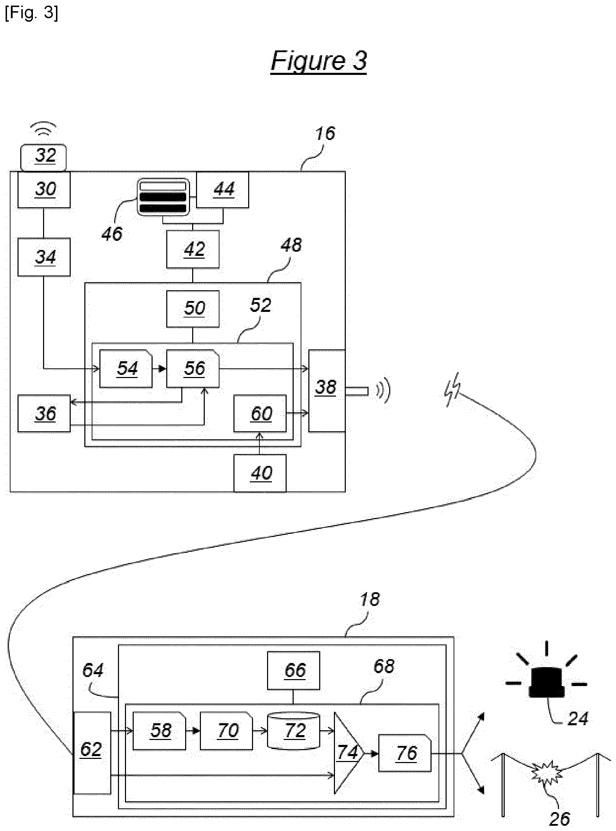

La figure 1 illustre en outre une installation de surveillance dynamique de la ligne électrique aérienne 10, cette installation comportant :
- une balise 16 disposée le long du câble conducteur 12, incluant un capteur d'une grandeur physique liée à ce dernier et un module de télécommunication (non visibles sur la figure 1) ;
- un calculateur distant 18 apte à interagir avec le module de télécommunication de la balise 16 pour fournir à chaque instant une valeur de courant permanent admissible, ou ampacité, dans le câble conducteur 12 ; et
- des moyens de calcul d'une valeur de flèche courante du câble conducteur 12 à partir de la grandeur physique mesurée par la balise 12, implémentés soit dans la balise 16 (cf. figure 2) soit dans le calculateur distant 18 (cf. figure 3).

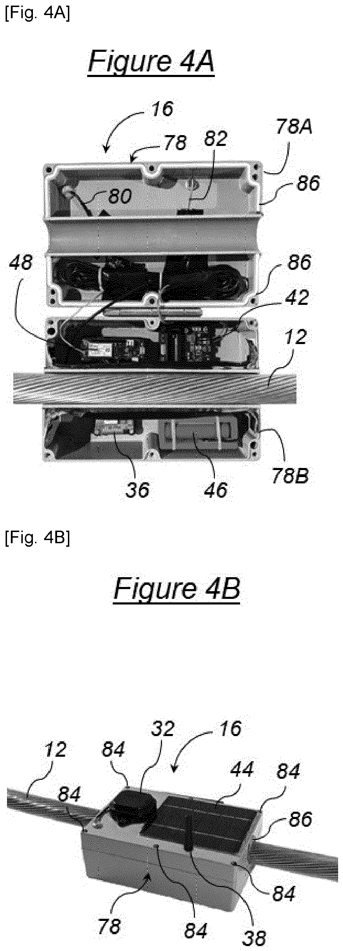

La balise 16 inclut en outre un élément de fixation au câble conducteur 12. Cet élément de fixation n'est pas visible sur la figure 1 mais plusieurs modes de réalisation différents seront détaillés en références aux figures 4A, 4B à 8.

Conformément aux principes généraux de la présente invention, la balise 16 est une balise de localisation dont le capteur de grandeur physique est un récepteur d'un système de positionnement par satellite GNSS (pour « Géolocalisation et Navigation par un Système de Satellites » ou de l'anglais « Global Navigation Satellite System ») pour la fourniture d'une information de position géolocalisée, en latitude, longitude et altitude, à l'aide d'une flotte satellite 20. Ainsi, son capteur donne directement cette information de position géolocalisée de la balise 16, avantageusement disposée le long du câble conducteur 12 pour en déduire simplement la valeur de flèche courante S de ce dernier, ou de façon équivalente sa hauteur courante H. La balise 16 est par exemple disposé à l'endroit où le câble conducteur 12 est le plus proche du sol, de la végétation, des constructions ou activités humaines, en fonction également des reliefs, en d'autres termes au point le plus critique du câble conducteur 12. La flèche courante S doit être comprise comme étant la distance verticale entre le segment de droite reliant les deux points d'accroche et ce point le plus critique du câble conducteur 12 auquel la balise 16 est avantageusement fixée. Par exemple, lorsque les deux points d'accroche sont à la même hauteur et que le sol est dégagé et plat, le point critique auquel la balise 16 peut être fixée est situé à égale distance des deux pylônes successifs 14.

On en déduit par ailleurs que les moyens de calcul précités sont plus précisément des moyens de calcul de la valeur de flèche courante S du câble conducteur 12 à partir de l'information de position géolocalisée par satellite fournie par le récepteur de positionnement de la balise 16.

Pour l'obtention d'une information de position la plus précise possible, notamment à l'échelle du centimètre ou d'au plus quelques centimètres, une technique de cinématique temps réel RTK (de l'anglais « Real Time Kinematic ») de système de positionnement par satellite GNSS est optionnellement mais avantageusement mise en oeuvre. Pour cela, au moins une station de géolocalisation par satellite de référence 22 dont la position exacte est connue est accessible en télécommunication par la balise 16 et lui fournit des signaux de correction, par exemple au format standard RTCM3.

Le calculateur distant 18 est programmé pour fournir dynamiquement la valeur d'ampacité en fonction au moins de la valeur de flèche courante S fournie par les moyens de calcul précités et d'une valeur de flèche maximale admissible prédéterminée Smax en régime permanent. De même que la valeur de la flèche courante S se déduit très simplement de la hauteur courante H du point le plus critique du câble conducteur 12, la valeur de flèche maximale admissible Smax est totalement corrélée à la hauteur minimale admissible Hmin. Par exception et en régime transitoire, le calculateur distant 18 peut optionnellement être programmé pour fournir dynamiquement également une valeur d'ampacité transitoire en fonction au moins de la valeur de flèche courante S et d'une valeur de flèche maximale admissible prédéterminée S'max totalement corrélée elle aussi à la hauteur minimale H'min.

En pratique, la hauteur Hmin à respecter entre le câble conducteur 12 et le sol (ou une installation quelconque disposée sous le câble conducteur aérien) lorsqu'il est sous tension en régime permanent dans un ouvrage de tension nominale U est généralement calculée en tant que somme d'une distance b minimale, dite « distance de base », et d'une distance t dépendante de U, dite « distance de tension ». La distance de base b est déterminée par des considérations d'encombrement à partir de l'affectation du sol et de la nature des installations qu'il comporte. Elle est fonction aussi du risque à prendre en compte, qui découle du niveau de tension et de l'isolation éventuelle des conducteurs. La distance de tension t est quant à elle fonction de la tension nominale U des ouvrages et de la probabilité que, dans un laps de temps donné, une personne ou un objet soit situé à la distance de base b du sol ou de l'installation considérée. Il est généralement recommandé ainsi d'adopter pour la distance t l'une des trois évaluations t1, t2, ou t3 suivantes selon que la probabilité de voisinage est considérée comme faible, moyenne ou forte :
- t1 = 0,0025 U,
- t2 = 0,005 U, et
- t3 = 0,0075 U,
où t1, t2, t3 sont exprimés en mètres et U en kilovolts. La valeur de t est obtenue en arrondissant t1, t2 ou t3 (selon le cas) au décimètre le plus proche. Concrètement, la distance de tension permet de se prémunir des phénomènes de surtension dans le câble conducteur 12.

Par conséquent, pour qu'un amorçage ait lieu en régime permanent (i.e. la formation d'un arc électrique à partir de la ligne électrique aérienne considérée), il faut que les trois conditions suivantes soient réalisées :
- la hauteur Hmin n'est pas respectée,
- une surtension apparaît dans la ligne électrique aérienne, et
- un élément tiers se trouve à l'aplomb de la ligne électrique aérienne.

A la hauteur Hmin correspond la flèche maximale admissible Smax et la température de répartition qui sont donc des valeurs constantes prédéterminées s'imposant au câble conducteur 12.

Un raisonnement similaire s'applique au régime transitoire, si ce n'est que la hauteur H'min à respecter entre le câble conducteur 12 et le sol (ou une installation quelconque disposée sous le câble conducteur) est calculée en tant que somme de la distance de base b et d'une distance de tension t' qui ne prend pas en compte les surtensions. La distance de tension t' est inférieure à t, de sorte que la hauteur H'min est inférieure à Hmin et que la flèche maximale admissible S'max en régime transitoire est supérieure à Smax. En revanche la flèche maximale admissible Smax en régime permanent est tolérée en permanence, alors que la flèche maximale admissible S'max en régime transitoire n'est tolérée que pendant une durée prédéterminée de 10, 20 ou 30 mn par exemple.

Différents modes de réalisation peuvent être imaginés pour la mise en oeuvre de l'installation de surveillance dynamique de la ligne électrique aérienne 10, dont deux vont être détaillés en référence aux figures 2 et 3. Dans cette installation, le calculateur distant 18 est représenté sur la figure 1 comme pouvant être matérialisé par un ordinateur. De façon classique, cet ordinateur comporte un microprocesseur, une mémoire vive pour l'exécution de traitements commandés par le microprocesseur, une mémoire non volatile pour le stockage de paramètres et de programmes d'ordinateurs, un bus pour l'échange de données entre le microprocesseur, la mémoire vive et la mémoire non volatile, au moins un port de communication pour l'échange de données avec des dispositifs externes tels que la balise 16, etc.

Plus précisément, la mémoire non volatile peut stocker :
- un programme d'ordinateur conçu pour la détermination dynamique de l'ampacité, de manière à former en coopération avec la balise 16 un système de détermination dynamique de courant permanent admissible dans le câble conducteur 12 ; et
- un programme d'ordinateur conçu pour :
   - la détection d'un dépassement de l'ampacité ainsi déterminée par l'intensité effectivement transmise par la ligne électrique aérienne 10, et
   - le déclenchement éventuel d'une alarme 24 visuelle et/ou sonore ou d'une action 26 telle qu'un abaissement ou une interruption localisée et temporaire de transport et/ou distribution de courant électrique dans le câble conducteur 12,
   de manière à former en coopération avec la balise 16 l'installation plus complète de surveillance dynamique de la ligne électrique aérienne 10.

Un lien filaire 28 est illustré pour matérialiser la connexion entre le calculateur distant 18 et la balise 16 de l'installation de surveillance mais ce lien peut bien évidemment également être au moins partiellement hertzien.

Dans le mode de réalisation de la figure 2, la balise de localisation 16 comporte une interface 30 de télécommunication avec la flotte satellite 20 et la station de géolocalisation par satellite de référence 22, connectée à une antenne 32 compatible avec les technologies GNSS et RTK. Elle comporte en outre le récepteur 34 de positionnement par satellite précité, raccordé à l'interface 30 et apte à recevoir non seulement les informations de position géolocalisée transmises par la flotte satellite 20 mais également les signaux de correction transmis par la station de géolocalisation par satellite de référence 22, ainsi qu'un calculateur local 36 d'information de position corrigée à partir de chaque information de position et de chaque signal de correction correspondant fournis par le récepteur de positionnement 34. La coopération de ces deux éléments fonctionnels électroniques et/ou logiciels forme un correcteur GNSS/RTK.

La balise de localisation 16 dispose en outre d'une interface 38 de télécommunication avec le calculateur distant 18, par exemple selon une norme quelconque de téléphonie mobile, notamment selon une technologie ou protocole d'interconnexion de l'Internet des Objets loT (de l'anglais « Internet of Things ») peu gourmand(e) en énergie.

De façon optionnelle, la balise de localisation 16 comporte en outre un module 40 capteur de données météorologiques locales, incluant un capteur de température, un capteur d'irradiation solaire et un capteur de vent. Dans ce cas, le calculateur distant 18 est programmé pour fournir une valeur de l'ampacité en fonction en outre des données météorologiques locales fournies par la balise de localisation 16.

La balise de localisation 16 dispose par ailleurs de moyens d'alimentation en énergie électrique. Ces moyens fonctionnels comportent en pratique une carte électronique 42 de gestion de l'alimentation en énergie, apte à gérer une source d'énergie électrique 44 et une batterie d'accumulateurs 46. Dans l'exemple de la figure 2, la source d'énergie électrique 44 est par exemple un panneau solaire disposé sur un boîtier de la balise de localisation 16 qui alimente les composants électroniques de la balise de localisation 16 et le, cas échéant, recharge la batterie d'accumulateurs 46 lorsque la luminosité est suffisante. La nuit, ou lorsque la luminosité est insuffisante, l'alimentation des composants électroniques peut basculer sur la batterie d'accumulateurs 46. Cette commutation est gérée par la carte électronique 42.

En variante, la source d'énergie électrique 44 est à récupération, par induction électromagnétique, de courant électrique conduit par le câble conducteur 12 auquel la balise de localisation 16 est destinée à être fixée. Dans ce cas, la batterie d'accumulateurs 46 est optionnelle. Mais elle peut malgré tout être utile pour être sollicitée lorsque peu de courant ou aucun courant ne transite par le câble conducteur 12.

La balise de localisation 16 comporte une carte réseau 48 à microcontrôleur(s) dont l'alimentation en énergie électrique est gérée par la carte électronique 42. Cette carte réseau 48 comporte de façon connue en soi au moins un processeur 50 et une zone mémoire 52 comportant plusieurs modules fonctionnels se présentant par exemple sous la forme de programmes d'ordinateurs. Telle qu'illustrée sur la figure 2, elle comporte ainsi fonctionnellement quatre programmes d'ordinateurs ou quatre fonctions d'un même programme d'ordinateur 54, 56, 58 et 60. On notera en effet que les programmes d'ordinateurs 54, 56, 58 et 60 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en oeuvre la carte réseau 48 pourrait être remplacé par un dispositif électronique composé uniquement de circuits numériques (sans programme d'ordinateur) pour la réalisation des mêmes fonctions.

Le premier programme d'ordinateur 54 remplit la fonction, lorsqu'il est exécuté par le microprocesseur 50, de recevoir les données fournies par le récepteur 34 de positionnement par satellite précité, à savoir les informations de position géolocalisée transmises par la flotte satellite 20 et les signaux de correction transmis par la station de géolocalisation par satellite de référence 22.

Le deuxième programme d'ordinateur 56 remplit la fonction, lorsqu'il est exécuté par le microprocesseur 50, de transmettre ces données à chaque instant au calculateur local 36 et de recevoir à chaque instant l'information de position corrigée calculée par ce dernier selon la technologie GNSS/RTK.

Le troisième programme d'ordinateur 58 remplit la fonction, lorsqu'il est exécuté par le microprocesseur 50, de calculer la valeur de flèche courante S du câble conducteur 12 à partir de l'information de position corrigée et de transmettre à chaque instant cette valeur de flèche courante S à l'interface de télécommunication 38. Le calcul de la flèche courante S à partir de l'information de position corrigée étant simple et purement géométrique en fonction de la configuration locale du câble conducteur 12 et de ses points d'ancrage, des pylônes 14 et du terrain (connaissance notamment de son altitude), il ne sera pas détaillé.

Enfin, le quatrième programme d'ordinateur 60 optionnel remplit la fonction, lorsqu'il est exécuté par le microprocesseur 50, de transmettre à chaque instant les données météorologiques locales fournies par le module capteur 40 à l'interface de télécommunication 38.

Dans le mode de réalisation de la figure 2 également, le calculateur distant 18 comporte une interface de télécommunication 62 apte à interagir avec l'interface de télécommunication 38 pour recevoir à chaque instant la valeur de flèche courante S et optionnellement les données météorologiques locales fournies par la balise de localisation 16. En variante, lorsque la balise de localisation 16 est dépourvue de module capteur 40 de données météorologiques, ces dernières peuvent être fournies par un prestataire externe apte à fournir des données météorologiques plus ou moins locales. De plus, une solution technique telle que celle enseignée dans le document de brevet WO 2017/125683 A1 peut être mise en oeuvre pour améliorer l'estimation d'au moins une partie des données météorologiques.

Comme évoqué précédemment, le calculateur distant 18 comporte un système informatique 64, par exemple matérialisé par un ordinateur, comportant une unité de traitement 66 (par exemple un microprocesseur) associée de façon classique à une mémoire 68 (par exemple une mémoire RAM ou autre) pour le stockage de fichiers de données et de programmes d'ordinateurs dont les instructions sont destinées à être exécutées par le microprocesseur 66.

Le système 64 tel qu'illustré sur la figure 2 comporte ainsi fonctionnellement trois programmes d'ordinateurs ou trois fonctions d'un même programme d'ordinateur 70, 74 et 76. On notera en effet que les programmes d'ordinateurs 70, 74 et 76 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en oeuvre le système 64 pourrait être remplacé par un dispositif électronique composé uniquement de circuits numériques (sans programme d'ordinateur) pour la réalisation des mêmes fonctions. En variante également, au moins une partie des programmes d'ordinateurs précités pourraient être distants et accessibles par le système 64 via Internet. D'une façon générale, même si tous les composants logiciels et de mémoire précités sont présentés comme rassemblés dans le même système 64, ils pourraient tout aussi bien être dispersés dans des éléments matériels distincts, voire éloignés les uns des autres, mais interconnectés en réseau (bus de transmission de données, réseau local, réseau étendu, Internet, etc.).

Le premier programme d'ordinateur 70 remplit la fonction, lorsqu'il est exécuté par le microprocesseur 66, de recevoir à chaque instant les données fournies par l'interface de télécommunication 38 de la balise de localisation 16, à savoir la valeur de flèche courante S et éventuellement les données météorologiques locales fournies par le module capteur 40, et d'en déduire, comme enseigné dans l'approche dynamique DLR de l'état de la technique précité, une valeur d'ampacité optimisée. Notamment, ce premier programme d'ordinateur 70 est conçu pour fournir la valeur d'ampacité par application de la relation d'équilibre thermique précitée selon le standard CIGRE ou IEEE à une température du câble conducteur 12 dérivée de la valeur de flèche courante S calculée. Cette ampacité est stockée, au moins temporairement, dans une zone 72 de la mémoire 68.

la relation d'équilibre thermique prise en considération et appliquée est par exemple l'une de celles définies dans le document P26 de Staszewski et al, intitulé « The différences betwen IEEE and CIGRE heat balance concepts for line ampacity considérations », publié à l'occasion de la conférence Modem Electric Power Systems 2010, Wroclaw (Poland).

Le deuxième programme d'ordinateur 74 remplit la fonction, lorsqu'il est exécuté par le microprocesseur 66, de comparer l'ampacité stockée en zone mémoire 72 avec une intensité effectivement transmise par la ligne électrique aérienne 10 telle que fournie par l'interface de télécommunication 62. Cette intensité effectivement transmise peut être fournie par un capteur dédié disposé le long du câble conducteur 12 ou par le gestionnaire du réseau électrique. Le deuxième programme d'ordinateur 74 détecte ainsi tout dépassement de l'ampacité.

Enfin, le troisième programme d'ordinateur 76 remplit la fonction, lorsqu'il est exécuté par le microprocesseur 66, de déclencher l'alarme 24 ou l'action 26.

On notera que tout ce qui a été détaillé en référence à la figure 2 est valable en régime permanent pour le calcul de l'ampacité, mais également par extension en régime transitoire pour le calcul de l'ampacité transitoire.

L'installation de surveillance dynamique de la ligne électrique aérienne 10 telle qu'illustrée par la figure 3 se distingue de celle de la figure 2 par le fait que les moyens de calcul de la valeur de flèche courante S sont intégrés dans le calculateur distant 18, l'interface de télécommunication 38 de la balise de localisation 16 étant alors configurée pour transmettre l'information de position corrigée fournie par exécution du programme d'ordinateur 56 précité au calculateur distant 18. Concrètement, cela se traduit par le fait que le troisième programme d'ordinateur 58 est implémenté et exécuté dans le système informatique 64 du calculateur distant 18 plutôt que dans la balise de localisation 16.

Les figures 4A et 4B illustrent par photographie une implémentation concrète possible de la balise de localisation 16 sous la forme d'un prototype.

Ce prototype comporte un boîtier 78, par exemple de forme générale parallélépipédique rectangle, à deux demi-coques 78A, 78B refermables l'une contre l'autre par charnière et vissage autour du câble conducteur 12 qui vient se loger dans deux conduits semi-cylindriques centraux respectifs des deux demi-coques 78A, 78B. Le boîtier 78 est de préférence conçu dans un matériau inoxydable pour éviter tout risque de corrosion et dans un matériau résistant aux rayons ultraviolets. Un matériau à privilégier pour cela est l'aluminium ou un alliage d'aluminium.

Dans un premier compartiment de la première demi-coque 78A, situé d'un côté de son conduit semi-cylindrique central, deux câbles d'antennes sont visibles : l'un (80) pour l'antenne GNSS/RTK 32 et l'autre (82) pour une antenne de l'interface de télécommunication 38. Dans un deuxième compartiment de la première demi-coque 78A, situé de l'autre côté de son conduit semi-cylindrique central et proche de la charnière, un surplus du câble d'antenne 80 vient se loger si besoin.

Dans un premier compartiment de la deuxième demi-coque 78B, situé d'un côté de son conduit semi-cylindrique central, viennent se loger la batterie d'accumulateurs 46 et le calculateur local 36 d'information de position corrigée. Dans un deuxième compartiment de la deuxième demi-coque 78B, situé de l'autre côté de son conduit semi-cylindrique central et proche de la charnière, sont disposées la carte électronique 42 de gestion de l'alimentation en énergie et la carte réseau 48 à microcontrôleur(s).

Les compartiments précités doivent être isolés du champ électromagnétique produit par le câble conducteur 12 par séparation métallique pour protéger les composants électriques qu'ils contiennent.

Le module 40 capteur de données météorologiques n'est pas implémenté dans ce prototype.

Dans la figure 4A, le prototype est photographié en disposition ouverte autour du câble conducteur 12 qui est logé dans le conduit semi-cylindrique central de la deuxième demi-coque 78B. Dans la figure 4B, il est photographié en disposition fermée autour du câble conducteur 12 qui est alors logé dans le conduit cylindrique central formé par les deux conduits semi-cylindriques centraux des première et deuxième demi-coques 78A et 78B. Selon un premier mode de réalisation, un élément de fixation à plusieurs trous taraudés 84 dans le boîtier 78 et plusieurs vis à tiges filetées correspondantes est prévu pour la fixation de la balise de localisation 16 autour du câble conducteur 12. Avantageusement, des joints 86 sont prévus pour étanchéifier les compartiments précités et le conduit central, parce que de l'eau coule immanquablement le long du câble conducteur 12 en cas d'intempéries et aurait ainsi tendance à entrer dans le boîtier 78 de la balise de localisation 16 si celle-ci ne comportait pas de tels joints d'étanchéité.

Dans la figure 4B, l'antenne GNSS/RTK 32, celle de l'interface de télécommunication 38 et le panneau solaire formant la source d'énergie électrique 44 sont visibles sur la face extérieure de la première demi-coque 78A du boîtier 78. L'antenne GNSS/RTK 32 est ainsi plus facilement positionnable horizontalement, sur support métallique inoxydable, ce qui améliore la convergence de l'algorithme de correction mis en oeuvre par le calculateur local 36.

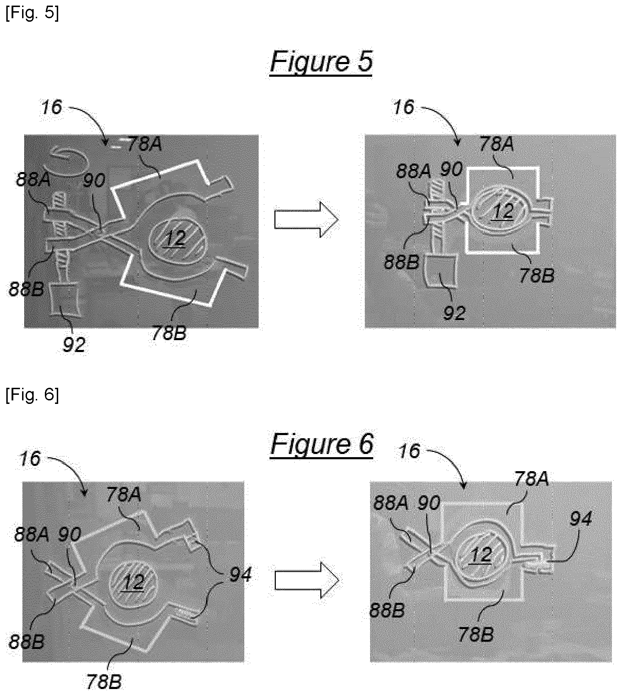

La figure 5 illustre un deuxième mode de réalisation possible pour l'élément de fixation de la balise de localisation 16 au câble conducteur 12.

En partie gauche de cette figure, le boîtier 78 est illustré en configuration ouverte de ses première et deuxième demi-coques 78A et 78B. Elles sont toutes les deux prolongées de bras 88A, 88B respectifs raccordés entre eux par une liaison pivot 90 formant charnière et aux extrémités libres taraudées pour l'insertion d'un système motorisé 92 à vis sans fin, de manière à former un élément de fixation de la balise de localisation 16 en forme de pince motorisée à vis. La partie droite de la figure 5 illustre le boîtier 78 en configuration fermée et serrée autour du câble conducteur 12.

La figure 6 illustre un troisième mode de réalisation possible pour l'élément de fixation de la balise de localisation 16 au câble conducteur 12.

En partie gauche de cette figure, le boîtier 78 est illustré en configuration ouverte de ses première et deuxième demi-coques 78A et 78B. Elles sont toutes les deux prolongées des bras 88A, 88B respectifs raccordés entre eux par la liaison pivot charnière 90, mais les extrémités libres de ces bras ne sont pas exploitées. Les deux demi-coques 78A et 78B sont par ailleurs pourvues de moyens complémentaires 94, opposés aux bras 88A, 88B, pour former une pince à loquet magnétique qui verrouille le boîtier 78 autour du câble conducteur 12. La partie droite de la figure 6 illustre le boîtier 78 en configuration fermée et serrée autour du câble conducteur 12.

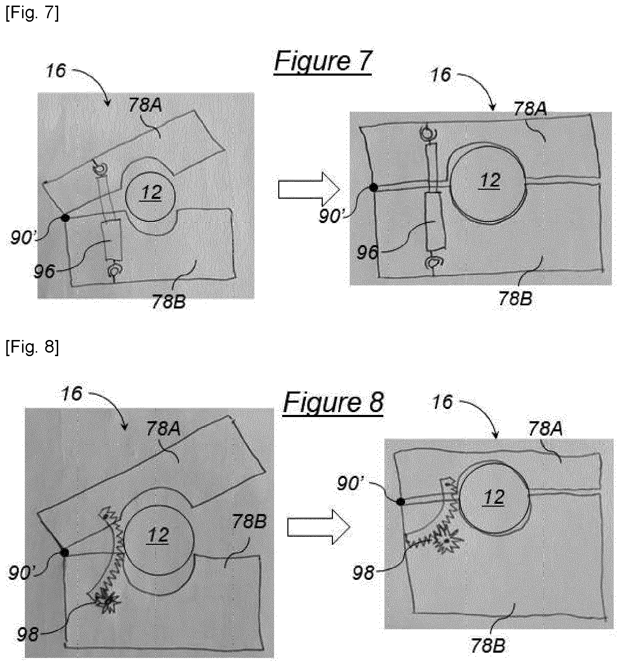

La figure 7 illustre un quatrième mode de réalisation possible pour l'élément de fixation de la balise de localisation 16 au câble conducteur 12.

En partie gauche de cette figure, le boîtier 78 est illustré en configuration ouverte de ses première et deuxième demi-coques 78A et 78B. Elles sont raccordées entre elles par une charnière 90'. Elles sont par ailleurs pourvues d'un vérin motorisé 96 pour former une pince motorisée à vérin qui verrouille le boîtier 78 autour du câble conducteur 12. La partie droite de la figure 7 illustre le boîtier 78 en configuration fermée et serrée autour du câble conducteur 12.

La figure 8 illustre un cinquième mode de réalisation possible pour l'élément de fixation de la balise de localisation 16 au câble conducteur 12.

En partie gauche de cette figure, le boîtier 78 est illustré en configuration ouverte de ses première et deuxième demi-coques 78A et 78B. Elles sont raccordées entre elles par la charnière 90'. Elles sont par ailleurs pourvues d'un système d'engrenage 98 à motoréducteur pour former une pince motorisée à motoréducteur et engrenage qui verrouille le boîtier 78 autour du câble conducteur 12. La partie droite de la figure 8 illustre le boîtier 78 en configuration fermée et serrée autour du câble conducteur 12.

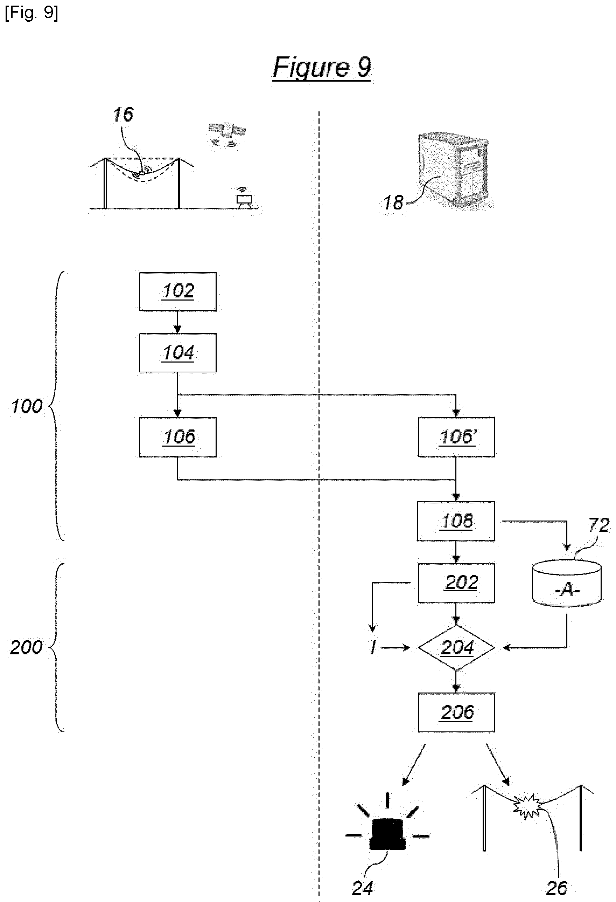

Un fonctionnement possible de l'installation de surveillance des figures 1 à 3 va maintenant être détaillé en référence à la figure 9 pour la mise en oeuvre d'un procédé de surveillance de la ligne électrique aérienne 10, ce procédé comportant une première phase 100 de détermination dynamique de courant permanent admissible ou ampacité et une deuxième phase 200 de surveillance proprement dite.

Au cours de la première phase 100, ce procédé consiste à déterminer, principalement pour le régime permanent mais accessoirement également pour tout régime transitoire, une valeur d'ampacité A (ou une valeur d'ampacité transitoire A') de la ligne électrique aérienne 10.

Une étape préalable 102 consiste à fixer la balise de localisation 16 au câble conducteur 12 de la ligne électrique aérienne 10 à l'aide de son élément de fixation 84, 90-92, 90-94, 90'-96, 90'-98 ou autre selon le mode de réalisation choisi pour ce dernier. Avantageusement, elle est positionnée au point le plus critique du câble conducteur 12, par exemple à l'aide d'un drone, d'une perche isolante ou d'une nacelle à diriger à l'approche du point d'ancrage pour une possibilité d'installation en travaux sous tension. Les modes de réalisation des figures 4 à 8 pour l'élément de fixation permettent une fixation sans manipulation, soit par la présence d'un moteur dans l'élément de fixation lui-même, soit par l'utilisation d'un dispositif externe pilotable à distance tel qu'une visseuse.

Au cours d'une étape suivante 104 qui peut être exécutée à tout instant, le calculateur local 36 de la balise de localisation 16 fournit une information de position corrigée selon la technologie GNSS/RTK, c'est-à-dire une position en latitude, longitude et altitude avec une précision de l'ordre du centimètre ou de quelques centimètres.

Au cours d'une étape suivante 106 et conformément au mode de réalisation de la figure 2, le programme d'ordinateur 58 implémenté dans la balise de localisation 16 calcule une valeur de flèche courante S du câble conducteur 12 à partir de cette information de position corrigée. Cette valeur de flèche courante S est alors transmise au calculateur distant 18.

En variante, au cours d'une étape suivante 106' et conformément au mode de réalisation de la figure 3, l'information de position corrigée de l'étape 104 est transmise au calculateur distant 18 et le programme d'ordinateur 58 implémenté dans le calculateur distant 18 calcule la valeur de flèche courante S du câble conducteur 12 à partir de cette information de position corrigée.

Au cours d'une étape suivante 108 réalisée par exécution du programme d'ordinateur 70 du calculateur distant 18, la valeur d'ampacité A (ou d'ampacité transitoire A') est déterminée et enregistrée en zone de mémoire 72.

Suite à cette étape d'enregistrement 108 mettant fin à la première phase 100 de détermination de l'ampacité A (ou A' en régime transitoire), le procédé illustré sur la figure 9 consiste à surveiller l'intensité du courant transitant effectivement dans la ligne électrique aérienne 10 au cours de la deuxième phase 200 de surveillance proprement dite. La deuxième phase 200 est réalisée par le calculateur distant 18 sur exécution de ses programmes d'ordinateurs 74 et 76.

Une première étape 202 de cette phase de surveillance consiste à fournir au calculateur distant 18 une intensité courante I effectivement transmise par la ligne électrique aérienne 10. Cette étape peut être exécutée périodiquement.

Ensuite, au cours d'une étape de test 204, cette intensité I est comparée à l'ampacité A enregistrée (ou A' en régime transitoire). A titre d'exemple non limitatif, si cette intensité mesurée dépasse l'ampacité A (ou A' en régime transitoire) pendant une durée supérieure à un seuil prédéterminé, l'étape de test 204 peut être suivie d'une étape finale 206 de déclenchement de l'alarme visuelle ou sonore 24, ou de l'action 26 par abaissement ou interruption temporaire de courant sur la ligne électrique aérienne 10.

Il apparaît clairement qu'une installation de surveillance dynamique d'une ligne aérienne de transport et/ou de distribution de courant électrique telle que l'une de celles décrites précédemment permet de surveiller cette ligne sur la base d'une détermination dynamique de courant permanent admissible ou ampacité plus simple et plus précise. En particulier, la mesure directe d'une information de position géolocalisée pour estimer simplement la flèche courante S du câble conducteur 12 permet de se passer de modèles existants pour l'estimation de cette flèche courante, tous plus ou moins pertinents et sources d'erreurs. En outre, les premiers prototypes réalisés, notamment celui des figures 4A et 4B, montrent que la balise de localisation 16 est simple à concevoir et installer, de dimensions limitées et légère. Elle ne nécessite aucune maintenance ou calibration dans le temps. Par ailleurs, aucun autre équipement n'est à installer sur les pylônes ou dans les postes électriques avoisinants.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Système de détermination dynamique de courant permanent admissible (A) dans un câble conducteur (12) suspendu entre deux pylônes (14) d'une ligne aérienne (10) de transport et/ou de distribution de courant électrique, comportant :
- une balise (16) incluant un élément (84 ; 90, 92 ; 90, 94 ; 90', 96 ; 90', 98) de fixation au câble conducteur (12), un capteur (34) d'une grandeur physique et un module de télécommunication (38) ;
- des moyens (58) de calcul d'une valeur de flèche courante (S) du câble conducteur (12) à partir de cette grandeur physique ; et
- un calculateur (18), distant et apte à interagir avec le module de télécommunication (38) de la balise (16), programmé pour fournir une valeur du courant permanent admissible (A) en fonction au moins de la valeur de flèche courante (S) calculée et d'une valeur de flèche maximale admissible (Smax) prédéterminée ;
**caractérisé en ce que** :
- la balise (16) est une balise de localisation, dont le capteur (34) est un récepteur de positionnement par satellite (20) pour la fourniture d'une information de position géolocalisée par satellite ;
- les moyens de calcul (58) sont des moyens de calcul de la valeur de flèche courante (S) du câble conducteur (12) à partir de l'information de position géolocalisée par satellite fournie par le récepteur de positionnement (34).

2. Système de détermination dynamique de courant permanent admissible (A) selon la revendication 1, dans lequel la balise de localisation (16) comporte en outre un correcteur (34, 36), implémenté en technique de cinématique temps réel de positionnement par satellite, comportant :
- un récepteur (34) de signal de correction fourni par au moins une station de géolocalisation par satellite de référence (22) ; et
- un calculateur local (36) d'information de position corrigée à partir de l'information de position fournie par le récepteur de positionnement (34) et du signal de correction.

3. Système de détermination dynamique de courant permanent admissible (A) selon la revendication 1 ou 2, dans lequel la balise de localisation (16) comporte une source d'énergie électrique (44, 46) à batterie d'accumulateurs électriques et/ou à panneau solaire photovoltaïque et/ou à récupération, par induction électromagnétique, de courant électrique conduit par le câble conducteur (12) auquel elle est destinée à être fixée.

4. Système de détermination dynamique de courant permanent admissible (A) selon l'une quelconque des revendications 1 à 3, dans lequel l'élément de fixation de la balise de localisation (16) au câble conducteur (12) comporte au moins l'un des éléments de l'ensemble constitué d'une pince motorisée à vis (90, 92), d'une pince à loquet magnétique (90, 94), d'une pince motorisée à vérin (90', 96) et d'une pince motorisée à motoréducteur et engrenage (90', 98).

5. Système de détermination dynamique de courant permanent admissible (A) selon l'une quelconque des revendications 1 à 4, dans lequel :
- la balise de localisation (16) comporte en outre un module (40) capteur de données météorologiques locales, incluant un capteur de température, un capteur d'irradiation solaire et un capteur de vent ; et
- le calculateur distant (18) est programmé pour fournir une valeur du courant permanent admissible (A) en fonction en outre des données météorologiques locales fournies par la balise de localisation (16).

6. Système de détermination dynamique de courant permanent admissible (A) selon l'une quelconque des revendications 1 à 5, dans lequel le calculateur distant (18) est programmé pour fournir la valeur du courant permanent admissible (A) par application d'une relation d'équilibre thermique prédéterminée selon un standard CIGRE ou IEEE à une température du câble conducteur (12) dérivée de la valeur de flèche courante (S) calculée.

7. Système de détermination dynamique de courant permanent admissible (A) selon l'une quelconque des revendication 1 à 6, dans lequel les moyens (58) de calcul de la valeur de flèche courante (S) sont intégrés dans un calculateur (48) inclus dans la balise de localisation (16), le module de télécommunication (38) étant alors configuré pour transmettre cette valeur de flèche courante (S) au calculateur distant (18).

8. Système de détermination dynamique de courant permanent admissible (A) selon l'une quelconque des revendication 1 à 6, dans lequel les moyens (58) de calcul de la valeur de flèche courante (S) sont intégrés dans le calculateur distant (18), le module de télécommunication (38) étant alors configuré pour transmettre l'information de position fournie par la balise de localisation (16) au calculateur distant (18).

9. Installation de surveillance dynamique d'une ligne aérienne (10) de transport et/ou de distribution de courant électrique comportant :
- un système de détermination dynamique de courant permanent admissible (A) selon l'une quelconque des revendications 1 à 8 ;
- des moyens (72) de stockage de la valeur de courant permanent admissible (A) fournie par le système d'estimation dynamique de courant permanent admissible ;
- une interface de transmission de données (62) conçue pour la réception d'une valeur d'intensité (I) de courant électrique effectivement transmise par la ligne aérienne (10) ; et
- un détecteur (66, 74) de dépassement de la valeur de courant permanent admissible (A) par la valeur d"intensité (I) reçue.

10. Procédé de détermination dynamique de courant permanent admissible (A) dans un câble conducteur (12) suspendu entre deux pylônes (14) d'une ligne aérienne (10) de transport et/ou de distribution de courant électrique, comportant les étapes suivantes :
- fixation (102) au câble conducteur (12) d'une balise (16) incluant un élément (84 ; 90, 92 ; 90, 94 ; 90', 96 ; 90', 98) de fixation au câble conducteur (12), un capteur (34) d'une grandeur physique et un module de télécommunication (38) ;
- fourniture (104) par le capteur (34) de la grandeur physique ;
- calcul (106 ; 106') d'une valeur de flèche courante (S) du câble conducteur (12) à partir de cette grandeur physique ; et
- calcul distant (108), par interaction avec le module de télécommunication (38) de la balise (16), d'une valeur du courant permanent admissible (A) en fonction au moins de la valeur de flèche courante (S) calculée et d'une valeur de flèche maximale admissible (Smax) prédéterminée ;
**caractérisé en ce que** :
- la balise (12) étant une balise de localisation, dont le capteur (34) est un récepteur de positionnement par satellite (20), c'est une information de position géolocalisée par satellite qui est fournie par ce dernier ;
- le calcul (106 ; 106') de la valeur de flèche courante (S) du câble conducteur (12) se fait à partir de l'information de position géolocalisée par satellite fournie par le récepteur de positionnement (34).
